# EUROPEAN PATENT APPLICATION

(11) **EP 1 176 557 A1**
(43) Date of publication of application: **30.01.2002**
(21) Application number: 00115862.5
(22) Date of filing: 24.07.2000
(51) Int. Cl.: G06T 7/00

(54) **Method and arrangement for camera calibration**

(71) Applicant: Setrix AG, 80807 München (DE)
(72) Inventor: Chiu, Ming-Yee, NJ 08540 (US); Depommier, Remi, NJ 08540 (US)
(74) Representative: Epping, Wilhelm, Dipl.-Ing.

(57) **Abstract**

A method for camera calibration records a digitized image of a figure (100, 110) with the figure preferably comprising a black disk (100), which is surrounded by a circular arrangement of radial line segments. The method extracts edge points from the recorded image and performs a Hough Transform on the edge points to obtain a centre (140) of the figure. Then, a diameter of the disk (100) is obtained to calculate the conversion factor, which represents the distance between the camera and the calibration figure. The method provides a reliable calibration even under cluttered background conditions.

## Description

### FIELD OF THE INVENTION

This invention relates to the processing of a special pattern of a figure to calibrate a camera. The invention further relates to an arrangement with a camera and a figure for calibrating said camera.

### BACKGROUND OF THE INVENTION

Calibration of a camera is a widespread requirement. There are many applications where the imaging system needs to be installed in the field and the installation procedure needs to be easy, fast, and human-error-resistant. One example is the use of the camera to read an analog or a digital meter in the residential house. An analog meter has a needle and a scale, a digital meter has digits on rotating wheels. In such type of applications, the object of interest is the 2D display panel of the meter. All the absolute dimensions of the display panel are stored in the system. However, depending on the meter-camera setup in the field, the meter can appear large or small in the digitized image. In this type of automated monitoring of meters, especially of analog meters, a camera captures a picture of the meter and recognizes the position of the meter needle relative to the meter scale. The picture recognition algorithm of the camera must be adjusted to the specific type of meter as well as the distance between the meter and the camera. However, the input of this data by human interaction is error prone and time consuming so that automated calibration systems and methods are known.

Usually a planar 2D pattern is used for calibration. The calibration pattern is placed at the plane of the intended object to be recognized. The camera captures the image, locates the pattern and extracts features to compute the distance-to-pixel conversion factor. This parameter then refers to the absolute dimension at the object plane where the calibration pattern is placed. There are numerous papers and patents on various kinds of calibration procedures. The most commonly used pattern is a black disk on a white background, or many disks arranged in a particular pattern to extract other information such as the direction and tilt angle of the 2D pattern with respect to the camera. However, circles are quite common in our environment. When this class of calibration pattern is placed in a cluttered background, sometimes other circle is mistaken as the calibration pattern. Even though it is possible to reduce the error by using multiple circles (or disks) arranged in a specific pattern, the calibration pattern could become large. Furthermore, the operation will need to input to the calibration algorithm what is the absolute dimension of the pattern presented for calibration. If another same pattern with different size is used, the algorithm needs to know it.

In the article Tsai, Roger: "An Efficient and Accurate Camera Calibration Technique for 3D-Machine Vision", IEEE Computer Society on Computer Vision and Pattern Recognition, 1986, pp. 364 - 374, a variety of camera calibration techniques are disclosed. One unique technique comprises a camera connected to an image acquisition hardware, which is further connected to a computer. The camera captures a picture of a predetermined fixed pattern. The pattern comprises a squared array of e.g. 4x4 rectangles.

The U.S. 5,329,469 discloses a visual sensor calibration method using a calibration pattern of circles, which are arranged in a rectangular shape. One circle with a larger diameter is arranged at the corner of the square, the other circles always have the same size.

In many object recognition and industrial inspection applications, the physical dimensions and the geometrical model of the object are used extensively in the algorithm to guide the localization and recognitation of the object. For objects that are 2D in nature or close to 2D (i.e., the extend of the object in depth is much smaller than the distance of the object to camera), it is necessary to know beforehand the conversion factor of the physical dimension of the 2D object and the pixel distance in the imaging system. For example, if the geometric model of the object shows that the distance from feature A to feature B is 4 cm, the algorithm needs to convert this physical dimension information to the pixel units such as 40 pixels since the image processing algorithm works mostly in pixel units for distance. Basically the calibration procedure for the camera derives two conversion factors, one along x-pixel and one y-pixel. When the pixels are square, only one conversion parameter is needed. It can be assumed that the camera has square pixels, with, for example, a conversion factor being 0.1cm/pixel.

### SUMMARY OF THE INVENTION

It is an object of the present invention to provide a method for calibrating a camera which is easy to handle and which provides a reliable calibration.

This object is solved by a method for calibrating a camera comprising the steps of: recording a digitized image of a figure, said figure comprising a first portion with a continuous circular shape and a second portion with a multitude of spaced segments arranged in a circular shape; extracting a set of edge points from said recorded image; performing a Hough Transform on said edge points to obtain a calculated centre of said second portion of said recorded image; obtaining a diameter of said first portion to provide a conversion factor which is representative of the distance between said camera and said figure.

It is a further object to of the present invention to provide an arrangement for the calibration of a camera which is easy to handle and which works reliably.

This object is solved by an arrangement for calibrating a camera comprising: a digital camera; a figure placed within the field of vision of said camera; said figure comprising a first portion with a continuous circular shape and a second portion with a multitude of spaced segments arranged in a circular shape; said camera having a means to record an image of said figure; said camera having a means to perform an edge point detection from said recorded image and to perform a Hough Transform on said edge points as well as means a for obtaining a radius from said first portion of said image to provide a conversion factor which is representative of the distance between said camera and said figure.

The method according to the invention performs a Hough Transform to locate the centre of the pattern. When the centre of the radial line segments, which are arranged in a circle, is known, the diameter of the disk of the figure can be easily detected. The figure preferably comprises a black continuous circle, which is surrounded by the spaced apart segments which are circularly arranged. Such segments are a portion of a radial line that starts at a centre and extends outwardly. Only the portion outside of the black circle appears on the figure. The centre of the circular arrangement of the segments as well as the centre of the continuous disk are the same. When the diameter of the disk is measured by the camera and is compared with the known predetermined actual diameter of the disk, the conversion factor, which is representative of the distance between the camera and the figure, can be calculated. For example, when the figure in a second position is more distant from the camera as compared to a first position, the disk appears smaller in the camera plane in the second position than in the first position. The conversion factor is the actual physical dimension of the disk (e.g. 5 cm) divided by the computed diameter of the disk in the digitized camera plane (e.g. 25 pixels). In this example, the conversion factor is 0,2 cm/pixel.

The diameter of the disk can be fixed. Alternatively, the disks of different figures can be of different size with the diameter being encoded into the segments surrounding the disk. The calibration program obtains an intensity profile of the arrangement of segments and decodes the diameter. The conversion factor is calculated depending on the decoded diameter, which represents the actual size of the disk. This embodiment supports the use of various figures with different feature sizes, so that a larger sized figure can be used when the figure is placed in a larger distance from the camera and a smaller sized figure can be used when the figure is placed closer to the camera.

The code which is employed to encode the diameter into the arrangement of segments can be a standardized bar code which represents numerals, characters and/or alphanumerical characters by a set of bars which have different length and different spacing in between. The invention uses a circular arrangement of the bars. However, an intensity profile through the segments corresponds to the linear well-known bar code system.

The information encoded in the radial line segments can further comprise control information, which is used to control the further performance of the camera. For example, after the completion of the camera calibration, further images are recorded and evaluated by a picture recognition algorithm within the camera. One application of the camera is in the field of analog or digital meter reading, where the actual value of the meter is determined by the picture recognition algorithm. The control information, which is encoded in the radial line segments, may comprise the type of the meter to be read, an identity code of the owner of the meter or an identity code, e.g. URL-internet address or telephone number of the service provider of the meter reading system. In all conceivable applications, the further processing of any image recorded after the camera calibration is influenced and controlled by the control information encoded in the radial line segments.

The circular bar code is arranged between an inner and an outer radius with respect to the centre of the figure, which is also the centre of the black disk. To enhance the amount of data to be encoded, a further circular bar code arrangement can surround the first bar code arrangement. Thereby, the inner radius of the further circular bar code arrangement is equal or larger than the outer radius of the first circular bar code arrangement. The further bar code is decoded according to the same principle as the first bar code arrangement by obtaining an intensity profile along a circle within the radial line segments of the further bar code arrangement.

When the figure is viewed from an oblique angle, e.g. not perpendicular to the centre of the figure, any circles appear as an ellipse. To decode any information from the figure, the recorded image is subjected to a linear transformation, which transforms the image into a plane, which stands normal to the distance between the camera and the centre of the figure. The transformed image appears to be viewed normally by the camera.

The Hough Transform is performed in a known way. Edge points as well as edge gradients are obtained from the recorded image. A vote line extends orthogonal to the edge gradient at the edge point with a vote line segment in a distance of a radius starting at the edge point. The vote lines are accumulated. The accumulated vote lines result in a maximum in the centre of the circle, which corresponds to the arrangement of the radial line segments. To obtain flexibility, the radius may not be known to the camera. In this case, ranges of radii are defined, which overlap each other. In particular, each range of radii is defined between a major and a minor radius, whereby the minor radius of one range is smaller than the major radius of another range, i.e. both ranges overlap each other.

The Hough Transform provides a reliable detection of the centre of the calibration figure. Even under cluttered background with multiple intensity variations, it is very unusual that a pattern according to the invention is present in the field of vision of the camera. Therefore, the method provides a reliable recognition of the figure even under cluttered background.

The method and the arrangement according to the invention also perform an automatically running camera calibration under cluttered environment and without any need for human input. There is no pre-assumption on how far the calibration pattern is placed, on the magnitude of the tilt angle with respect to the camera, and on the size of the pattern being presented. The same pattern is used to determine precisely the center of the pattern for localization purpose. As an advantage, additional information can be encoded into the same calibration pattern for controlling the operation of the system or for other purposes. The present invention allows the placement of the calibration pattern of any size on the face of the meter and the meter reading can start immediately without any human input, which is error-prone.

The method according to the invention can also be used for other applications in such a way that each individual pattern is encoded with an identification (ID) number. For example, the multiple patterns can be placed in a large room to calibrate physical dimension in many different planes in the room. When the plane to be calibrated is far from the camera, a larger pattern can be used so that its image remains large enough to be analyzed. The system knows what is the absolute dimension automatically. Since each pattern has its own ID, it can be identified uniquely.

As an additional advantage, the camera and the signal processing device connected to the camera can be provided with any arbitrary control information. For example, if the camera is the input device for a meter reader all information about e.g. the type of meter to be read, the location of the meter, etc. can be input to the reader. Especially, when the reader has a communication interface which transmits the data read to a host, the telephone number of the service provider or other URL (uniform resource locator) address for Internet connections can be encoded into the pattern to eliminate the need of human input.

The method provides a reliable calibration even under cluttered environment conditions. Further, during the calibration process, information encoded in the pattern for other purposes can be extracted.

### BRIEF DESCRIPTION OF THE DRAWINGS

- Figure 1: is a calibration pattern used to calibrate the camera as well as provide other relevant information encoded into the pattern;
- Figure 2: is a program flow of the calibration method;
- Figure 3: illustrates the vote accumulation of the Generalized Hough Transform for Radial Line Segments;
- Figure 4: shows the division of a radius range into multiple radii pairs for multiple Generalized Hough Transforms;
- Figure 5: shows another variation of the calibration pattern consisting of two stacked circular bar codes for more information encoding; and
- Figure 6: shows a block diagram of the arrangement comprising a camera and the calibration pattern.

### DETAILED DESCRIPTION OF THE INVENTION

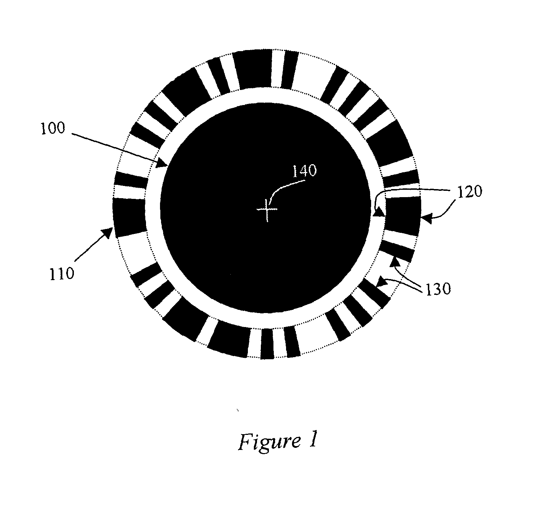

The calibration pattern, called "Sunshiny", is shown in Figure 1. It consists of two sub-patterns. The inner pattern 100 is a black circular disk. The outer pattern 110 is a set of bars and spaces arranged in a circle. The outer pattern can be a linear bar code arranged in a circular path as shown. Information, including the diameter of the circular disk 100, can be encoded in this outer pattern 110. The boundary of the bar or space element is bounded by two circles 120 from the top and the bottom, and from the side by a set of radial lines 130. The center of two bounding circles 120 coincides with the center of the disk 100. All radial lines 130 intercept also at this central point 140. The radial lines 130 are used to locate the center 140 of the Sunshiny pattern. The center of the disk and the center of the arrangement of the radial line segments are the same. The diametrical size of the disk 100 tells the system how to compute the distance-to-pixel conversion, using the absolute diameter information decoded from the bars/spaces code in the outer pattern 110. The algorithm also can derive the tilt angle of the pattern with respect to the camera since the disk pattern 100 will appear as an ellipse if it is viewed from an oblique angle.

The circular bar code in sub-pattern 110 differs from the traditional linear bar code only in the sense that the code is a wrap-around pattern. Therefore only a start pattern of the code is needed if the bar code is scanned always in one circular direction. For example, if the code 39 symbology is used, then instead of using the character * (a binary word encoded as 010010100) for both start and the stop characters, here only one * character is used for the circular bar code. The bar code encodes numerals, characters, or alphanumeric information. The bar code which is used in the invention complies to any standardized well known bar code.

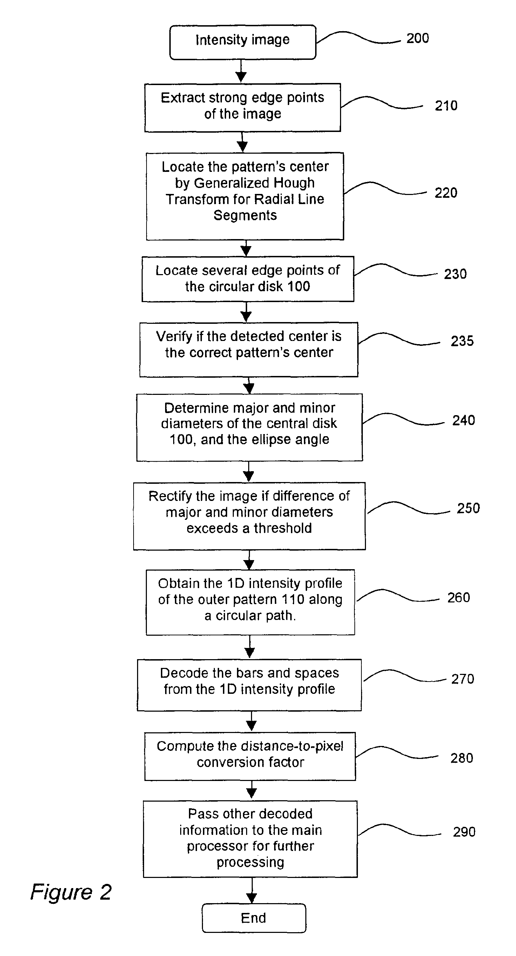

Referring now to Figure 2, it shows a flow diagram illustrating the operation of a preferred embodiment of the calibration algorithm according to the present invention. The input is the intensity image 200 of the Sunshiny pattern captured from the camera. The image is a 2D array indexed by the x-pixel and y-pixel coordinates. All computations related to distance measurement are expressed in pixel unit until step 280 where the absolute physical distance unit, such as centimeter, is needed for the conversion factor. Step 210 performs two 3x3 Sobel operations in the x- and y-direction to extract the x-gradient and y-gradient of the image. By computing the magnitude of the gradient, which is the square root of the sum of the square of the x- and y-gradients, a gradient magnitude image whose intensity representing the strength of the edginess of the original image, is obtained first. Then those points whose gradient magnitude exceeding a threshold, called "strong edge points", are identified. For black and white design pattern like Sunshiny, the edge gradient is usually high compared to that from the background.

Step 220 uses a method called Generalized Hough Transform (GHT) for Radial Line Segments (RLS) to locate the center of the Sunshiny pattern. This technique is also used for the recognition of the center of a graduation scale of an analog meter as is disclosed in (not yet published) European Patent Application 00 101 947.0.

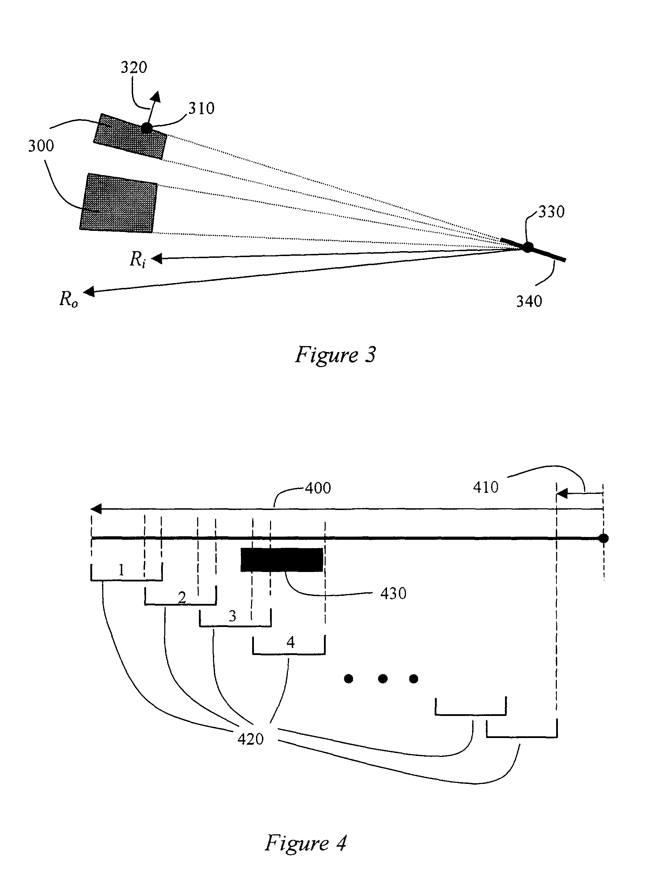

Referring to Figure 3, the strong edge points extracted from step 210 will be located around the boundary of the black bar elements 300 of the outer pattern 110. Because of the construction of the bar pattern, all the radial edge lines point to the center 330 of the pattern, which is the same as point 140 in Figure 1. Only a strong edge point 310 is considered whose x-and y-gradient is a vector 320 normal to the boundary of the bar element. If the innermost radius Ri and the outermost radius Ro of the radial edge lines are known, then for each strong edge point 310, a uniform line of votes 340 on a parameter plane called "vote accumulation plane" is deposited. This line of votes is normal to the gradient direction 320 and located at a distance of Ri to Ro from the point 310. Actually, another line of vote (not shown in Figure 3) at the opposite side of the point 310 will also be deposited. This is because it is not known which side the pattern center will be located at this point. For other strong edge points on the same radial edge line, the line of votes will be shifted slightly depending on the position of the strong edge point. The resultant accumulation is a triangular shape vote line centered at the pattern center 330. If the process is repeated for other radial edge points of the bar patterns, the vote accumulation will create a strong peak at the center of the pattern 330, which is the same as point 140. For the vote lines on the other side of the edge points, it will not create any peak since the vote lines are spread over a large circle. The strong peak in the vote accumulation plane is almost only caused by the radial line segments which are arranged in circular shape. For other strong edge points generated from step 210, including edge points from circles or disks, the vote line will be spread over a large area. Therefore by detecting the peak in the vote accumulation plane, the center of the Sunshiny pattern can be uniquely determined. The center accumulation is strong since there are many radial edges points in the outer bar code pattern 110. This is the reason why the Sunshiny pattern can be detected easily under the cluttered background that may consist of many circles and straight lines.

It is to be noted that this Generalized Hough Transform also works when the outer bar code pattern 110 appears as an elliptical shape. This is the case when the Sunshiny pattern is viewed at an oblique angle. All radial edges lines still point to the center of the pattern when viewed obliquely.

However, the radii Ri and Ro (in pixel unit) are not known in general. The outer bar code pattern 110 can be of any arbitrary size in the image. Therefore, there is a need to compute multiple vote accumulation planes for all possible radii pairs Ri and Ro. Since the entire Sunshiny pattern needs to be in the field of view of the image, the maximum outer radius Ro possible is half the height of the image, assuming the width of the image is larger than the height of the image. The minimum inner radius can be a small value where the pattern has enough resolution for analysis. Referring to Figure 4, from the maximum radius 400 and minimum radius 410, N sets of radii pairs 420 can be computed with some overlapping between two neighboring pairs. A typical value for overlapping is 25% of the radial range. Each radii pair is used to compute the Generalized Hough Transform of the vote accumulating plane corresponding to that radii pair.

Depending on the width of the circular bar code pattern 110, and the size of the entire pattern in the image plane, and the number of divisions of the radius N, the peak can be located in one, two or even three vote accumulation planes. The vote plane with the maximum peak will be selected for computing the center of the Sunshiny pattern. For better accuracy, the center 140 can be determined by computing the centroid of the votes on the selected vote accumulation plane. For example, if the bar element 430 of the outer pattern 110 lies in the #3 and #4 radii pairs as shown in Figure 4, then both vote accumulation planes #3 and #4 will have vote lines like 340 from different radial edge points intercepting at the pattern's center 330 and therefore creating a peak there. However, because the number of radial edge points contributing to the peak on the #4 plane is more than that on the #3 plane, the peak in #4 vote accumulation plane will be used to determine the centroid of the pattern's center.

With the center of the pattern computed, step 230 then locates a set of edge points on the boundary of the circular disk 100. This is done by checking the gradient magnitude of the image along a radial line outward from the pattern's center 140. Usually the gradient magnitude will be very small until when it reaches the boundary of the disk 100 where the gradient magnitude will become large and reaches a local maximum. The coordinate of this local maximum and the radius of this boundary point are then recorded. This is repeated for 8 or 16 regular angles over the entire 360 degrees. Therefore a set of 8 or 16 boundary points of the black disk is obtained.

Step 235 verifies that if the pattern's center determined from the outer sub-pattern 110 is indeed located inside the inner circular disk 100. Even though the radial line pattern is rarely seen in a typical environment, there is still a very small possibility that a wrong center is detected. However, the combination of a set of radial line pattern and a black disk (which is an elliptical disk when viewed obliquely) inside is not very common. To verify if the pattern's center is the right one, one method is to check if the radii extracted from step 230 differs within a certain limit. For example, if the maximum viewing angle of the Sunshiny pattern allowed is 45 degrees, then the minimal radius of the elliptical disk is cos(45°) = 0.707 times the maximal radius. Therefore if the range (i.e., maximum minus minimum) of the radii obtained from step 230 is greater than 0.6 times the maximum radius, then the system can conclude that the pattern's center detected by step 220 is not correct and thus no Sunshiny pattern is detected. Another simple method is to check if the maximum gradient magnitude in a small region centered on the pattern's center is very small. The size of this check region can be determined from the minimal size allowed for the Sunshiny pattern.

Step 240 computes the properties of the disk 100 from the locations of the extracted boundary points. In general, the disk 100 appears as an ellipse in the image when the disk is viewed in an oblique angle. By fitting an ellipse to the boundary points, the major and minor diameters and the angle of the ellipse can be determined. When the major and minor diameters are the same, it is an indication that the Sunshiny pattern is viewed normally. This diameter, which is in pixel units, will be used in step 280 to compute the distance-to-pixel conversion factor.

Step 250 is performed only if the difference between major and minor diameters exceeds a threshold. This is the case when the camera views the Sunshiny pattern at an oblique angle. Step 250 makes a linear transformation of the original image so that the original image becomes a normally viewed image. First, the image is rotated with a negative of the ellipse angle computed from step 240. Then it is re-sampled along the minor axis, which now coincides with the image y-axis, so that, after re-sampling, the value of the minor diameter is the same as the major diameter. Essentially, the image along the y-axis is stretched. The entire pattern, which was in elliptical shape, is now rectified into a circular shape, including the circular bar code pattern. The rectified image is that image which would be viewed when the figure would stand in a plane which is normal to the distance between the camera and the center of the Sunshiny pattern.

The procedure used in step 250 to rectify the image will also be used during the actual run of the object recognition algorithm since the conversion parameter derived in 280 later is valid only for the same image rectification procedure. The situation of oblique view can happen in real application because sometimes the condition in the field does not allow normal viewing of the object to be recognized. In this case, the Sunshiny pattern is placed on the same plane of the object, such as the display panel of the meter, during the calibration procedure.

The next step is to decode the information from the bar code sub-pattern 110. This sub-pattern contains the value of the physical diameter of the disk 100 in units of centimeters for example. The design of the Sunshiny pattern is that there is a fixed ratio between the mid radius of the outer bar code pattern 110 and the radius of the circular disk 100. Knowing the radius of the disk by step 230, the mid radius of the bar code pattern can be computed in step 260. Then using this mid-radius, a 1D intensity profile of the bar code can be "scanned" by sampling the intensities, either from the original image or from the rectified image, along a circular path.

Step 270 then decodes the 1D circular bar code pattern. This is similar to the well-known decoding procedure from the bar code industry. As mentioned earlier, the difference is that here the 1D intensity profile is a wrap-around function. The decoding process can be done by first recognizing the start character of the code. The rest is the same as the traditional linear bar code decoding procedure.

The information encoded in pattern 110 has the value of the physical diameter of the circular disk 100, and if needed the unit of the dimension used (cm or inch etc.) Step 280 uses this information to compute the conversion factor by dividing this physical diameter by the diameter of the disk in pixel unit, derived in step 240 or 250.

If there are other parameters encoded in the circular bar code pattern, step 290 passes these parameters to the main program for further processing. The bar code comprises codes for numerals, charcters and alphanumeric information.

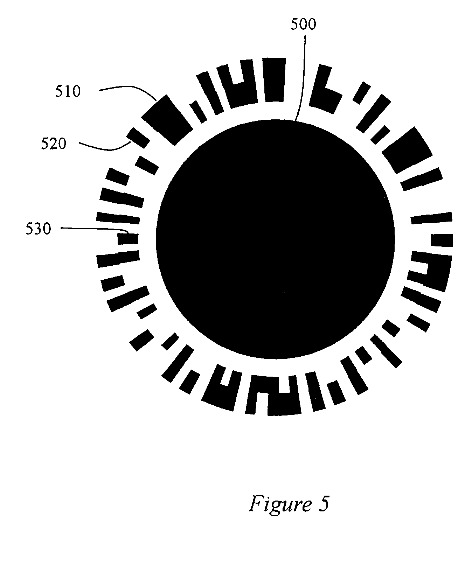

One variation of the preferred embodiment is to use multiple stacked bar codes to increase the amount of encoded information. An example is shown in Figure 5, the outer sub-pattern 510 has two stacked bar codes 520 and 530. The ratios of the mid-radii of both circular bar codes to the radius of the central disk 500 are fixed. The algorithm flow as shown in Figure 2 is the same except that in steps 260 and 270, multiple bar code profile extraction and multiple bar code decoding are performed. The detection of the start character of the bar code needs only be done once if all stacked bar codes share the same start character. It is to be noted that the Generalized Hough Transform for Radial Line Segments remains as effective when multiple stacked bar codes are used. This is because that the vote contribution to the pattern's center only depends on the number of radial edge points pointing toward the center, independent of the angular location of the radial edge points, as long as these edge points all point toward the same center.

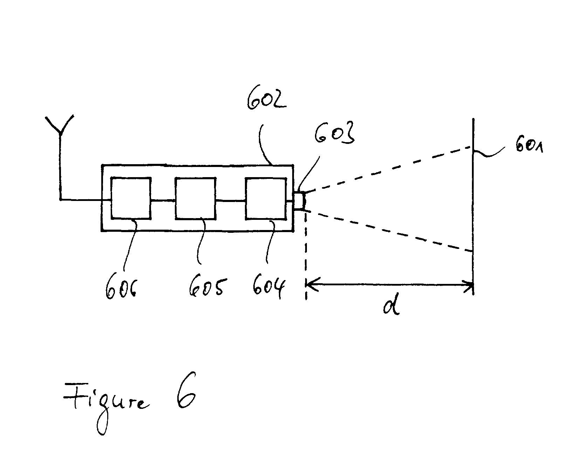

In Figure 6, the Sunshiny pattern 601 stands within the field of vision of a camera 602. The Sunshiny pattern can be any of the patterns of figure 1 and figure 5. The pattern 601 is located at a distance d from the camera. The camera 602 has a lens system 603, which projects the captured image onto a CCD element 604. A processor 605 performs the Hough Transform including the edge point detection and the radius detection of the disk of the Sunshiny pattern. In addition, a communication device 606 communicates any information to a central host system, when the camera reads a digital or analog meter in an automatic meter reading system. Preferably, the communication device 606 is a wireless communication module of a cellular telephone system, which communicates to the host system via an Internet protocol or a dial-up communication.

## Claims

1. Method for calibrating a camera (602) comprising the steps of:
- recording a digitized image of a figure (100, 110, 500, 520, 601), said figure comprising a first portion (100, 500) with a continuous circular shape and a second portion (110, 530) with a multitude of spaced segments arranged in a circular shape;
- extracting a set of edge points (310) from said recorded image;
- performing a Hough Transform on said edge points (310) to obtain a calculated centre (140, 330) of said second portion (110) of said recorded image; and
- obtaining a diameter of said first portion (100) to provide a conversion factor which is representative of the distance between said camera (602) and said figure (601).

2. Method according to claim 1,
**characterized by**
obtaining an intensity profile of said second portion (110, 530) of said recorded image to provide an intensity pattern and decoding said intensity pattern of said second portion of said recorded image to provide a value representative of said diameter of said first portion (100, 500) of said figure to provide said conversion factor.

3. Method according to claim 2,
**characterized in that**
said intensity pattern is decoded to obtain control information, **in that** said camera (602) records a further image different from said image and **in that** the processing of said further image is controlled by said control information.

4. Method according to any of claims 1 to 3,
**characterized in that**
an edge point on the boundary of the first portion (100, 500) of said image is obtained and **in that** an intensity profile of said first portion (100, 500) comprising said edge point and said calculated centre (140, 330) is obtained to provide a radius of the circular shape of said first portion (100, 500) of said image.

5. Method according to any of claims 1 to 4,
**characterized in that**
at least two radii of said first portion (100, 500) of said image are obtained, **in that** a linear transformation of said image into a plane normal to a distance between said camera (602) and said calculated centre (140, 330) of said figure (601) is performed.

6. Method according to any of claims 1 to 5,
**characterized in that**
said segments (430) of said second portion (110, 530) of said figure (601) are arranged in said circular shape within a distance between a first minor and a first major radius with respect to a centre of said figure (140, 330), **in that** a vote line (340) is obtained which is located along a direction orthogonal to a direction of an edge gradient (320) at one of said edge points (310) at a distance between an estimated first minor and an estimated first major radius from said edge point, **in that** at least two vote lines are obtained from different edge points and **in that** said vote lines (330) are accumulated to obtain said calculated centre (140, 330).

7. Method according to claim 6,
**characterized in that**
said step of obtaining said vote lines (330) and said step of accumulating said vote lines (330) is performed for at least an estimated second minor and estimated second major radius and **in that** said estimated second minor radius is smaller than said estimated first major radius.

8. Method according to claim 6 or 7,
**characterized in that**
said figure (601) has a further portion (510) of a multitude of spaced segments arranged in circular shape between a further minor and a further major radius, said further major radius being larger than said first major radius of said second portion of said figure and **in that** an intensity profile of said further portion of said recorded image is obtained and is decoded to obtain control information for the operation of said camera (602).

9. Method according to any of claims 1 to 8,
**characterized in that**
said second portion (110, 530) of said figure comprises a circular arrangement of bars and **in that** an intensity profile along a circular path through said second portion of said figure complies to a standardized bar code to encode alphanumeric information into said second portion of said figure.

10. Arrangement for calibrating a camera comprising:
- a digital camera (602);
- a figure (601) placed within the field of vision of said camera (602);
- said figure (601) comprising a first portion with a continuous circular shape (100, 500) and a second portion with a multitude of spaced segments (110, 530) arranged in a circular shape;
- said camera (602) having a means to record an image of said figure;
- said camera (602) having a means (605) to perform an edge point detection from said recorded image and to perform a Hough Transform on said edge points as well as means a for obtaining a radius from said first portion of said image to provide a conversion factor which is representative of the distance between said camera (602) and said figure (601).
